Europäisches Patentamt

European Patent Office

Office européen des brevets

(11) Numéro de publication: **0 067 264**
**B1**

(12) **FASCICULE DE BREVET EUROPEEN**

(45) Date de publication du fascicule du brevet: **24.09.86**

(51) Int. Cl.⁴: **F 16 L 47/04**, F 16 L 33/22

(21) Numéro de dépôt: **81810211.3**

(22) Date de dépôt: **01.06.81**

(54) **Raccord étanche pour tubes déformables.**

(43) Date de publication de la demande:
**22.12.82 Bulletin 82/51**

(45) Mention de la délivrance du brevet:
**24.09.86 Bulletin 86/39**

(84) Etats contractants désignés:
**AT BE CH DE FR GB IT LI LU NL SE**

(56) Documents cités:
**BE-A- 401 558
FR-A- 775 706
FR-A-1 209 549
FR-A-2 075 870
US-A-2 091 085
US-A-2 935 339
US-A-3 653 692**

(73) Titulaire: **PABRECO S.A.
2, Rte Mgr. Besson
CH-1700 Fribourg (CH)**

(72) Inventeur: **Mattes, Rolf
8, Rte Mgr. Besson
CH-1700 Fribourg (CH)**

(74) Mandataire: **Moinas, Michel
Moinas & Cie 42, rue Plantamour
CH-1201 Genève (CH)**

Courier Press, Leamington Spa, England.

## Description

La présente invention a trait à un raccord étanche pour tubes déformables, notamment pour tubes en matière plastique comprenant une âme métallique.

On connaît les qualités des tubes en matière plastique pour le transport de nombreux fluides, tels que les eaux d'adduction, les eaux usées, les liquides agressifs et les gaz. Au nombre de celles-ci on peut citer par exemple l'inertie physique et chimique, la facilité de montage surtout si ces tubes sont déformables, la non-conduction des bruits, l'absorption des vibrations et des chocs. L'utilisation de tels tubes nécessite cependant l'emploi de raccords appropriés, tenant si nécessaire une haute pression, et d'un montage aisé. En outre, ces raccords doivent être peu onéreux, pour ne pas grever le coût total de l'installation, la matière plastique étant un matériau généralement bon marché.

Dans l'exposé d'invention FR—A—2 075 870, on décrit un accouplement pour tuyaux flexibles comprenant une partie mâle présentant une surface de révolution tronc-conique et une pièce de serrage ou bride. La fixation du tube est réalisée par coincement entre la bride de la surface de révolution tronc-conique.

Dans l'exposé d'invention BE—A—401 558, on décrit un raccord pour tuyaux souples présentant également un appui conique coopérant avec une bride ou douille filetée.

L'invention vise précisément à résoudre les besoins énoncés plus haut, avec des moyens techniques différents de ceux des exposés cités.

Pour ce faire, on propose un raccord "haute pression" de conception simple et d'un maniement rudimentaire. Ce raccord étanche comprend, par tube à raccorder, une bride filetée extérieurement à enfiler sur le tube et à visser dans un manchon portant intérieurement des filetages correspondants. Ce manchon porte intérieurement, de son coeur en direction de chacune de ses extrémités, une surface de révolution tronc-conique convergente qui émerge de la paroi intérieure à une profondeur supérieure à la longueur de pénétration de la bride dans le manchon. La surface de révolution tronc-conique se termine, du côté du coeur du manchon, par une surface de révolution cylindrique et le diamètre intérieur de la bride est supérieur au diamètre extérieur de la surface de révolution cylindrique terminant la surface de révolution tronc-conique.

Ces caractéristiques ménagent ainsi un espace libre dans lequel, une fois le montage par vissage réalisé, l'extrémité du tube, déformée vient se loger et se comprimer.

Les forces ainsi engendrées peuvent, par échauffement du matériau enfermé dans l'espace mentionné ci-dessus, provoquer la dilatation de celui-ci, contribuant favorablement à l'étanchéité. De même, la friction augmente et tend à empêcher les tubes de tourner par rapport au manchon. Ajoutée à cela la forme particulière de l'espace libre et on comprend aisément pourquoi il est très difficile, sinon impossible, de sortir les tubes du raccord par arrachement.

Le manchon peut avoir une forme quelconque, droite courbe, en T ou en X. La bride peut être filetée sur toute ou partie de sa longueur. Dans ce deuxième cas, sa partie lisse a un diamètre au plus égal au diamètre en crête du filetage intérieur du manchon. Au lieu d'être lisse, cette partie peut être crantée, ou filetée à un diamètre inférieur.

De préférence, ce filetage intérieur au manchon est interrompu avant l'émergence de la surface de révolution tronc-conique convergente, la surface lisse ainsi ménagée étant d'un diamètre au plus égal au diamètre en creux dudit filetage. En outre, les espaces délimités par le droit du filetage intérieur du manchon dans un sens et par le droit de la surface de révolution tronc-conique convergente dans l'autre sens se chevauchent. Cette disposition permet une déformation du tube par évasement et augmentation de diamètre et prévient encore mieux le retrait de ce tube par arrachement.

Ce raccord peut être démonté facilement en séparant par dévissage les brides du manchon.

Dans une autre forme d'exécution, la bride comprend, dans sa partie médiane, un étranglement annulaire faisant faiblesse. Au cours du montage par vissage, cet étranglement cède et la bride se brise en deux parties. Un tel raccord ne peut pas être démonté, puisque la partie brisée de la bride fait obstacle au retrait.

Le dessin annexé illustre, à titre d'exemple, le raccord selon l'invention.

La figure 1 représente une bride enfilée sur un tube armé métalliquement, ce tube étant présenté en coupe.

La figure 2 est une vue en coupe d'un manchon droit.

La figure 3 est une vue en coupe correspondant à la figure 1, la bride portant un étranglement annulaire.

La figure 4 est une vue du raccord monté à l'aide des éléments des figures précédentes. La partie centrale du raccord est représentée en coupe.

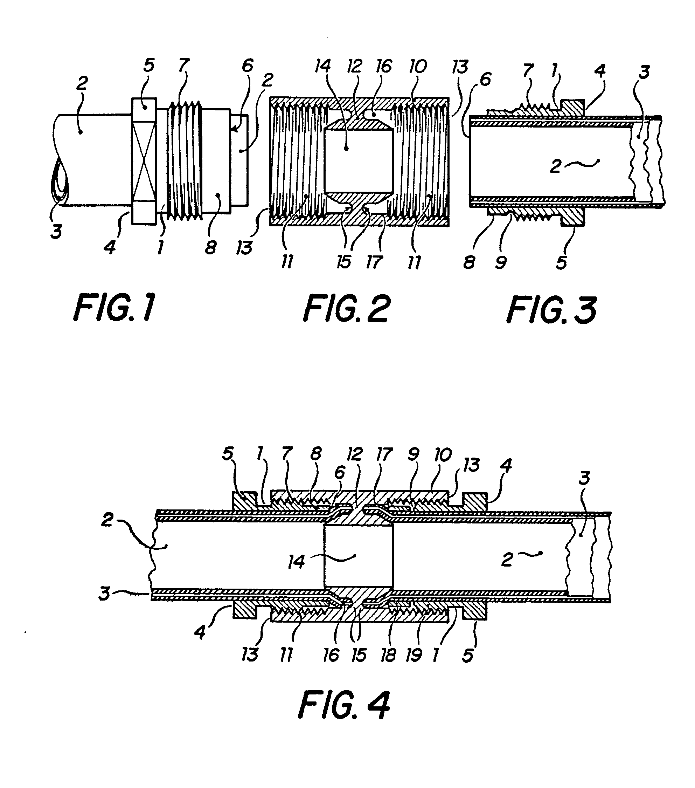

En référence aux figures 1 et 3, on voit de chaque côté une bride 1 enfilée sur une tube 2 portant une âme métallique 3. Chacune de ces brides porte, à une de ses extrémités 4, un col 5 permettant la préhension par une clé, pour le vissage. L'autre extrémité 6 laisse dépasser légèrement le tube 2.

Cette bride 1, telle que représentée ici, comporte une partie filetée extérieurement 7 suivie d'une partie lisse 8.

Sur la figure 3, la bride 1 porte un étranglement annulaire 9 faisant faiblesse.

La figure 2 représente, en coupe, un manchon 10 dans lequel va venir s'assujetir, de chaque côté, la bride 1. Ce manchon 10 porte intérieurement des filetages 11 correspondant aux filetages 7 des brides et, de son coeur 12 en direction de chacune de ses extrémités 13, une surface de révolution tronc-conique convergente 14. Cette surface 14 émerge de la paroi intérieure 15 à une profondeur supérieure à la longueur de pénétration de la bride 1 dans le manchon 10. Elle se termine, vers le centre, par une surface cylindrique. Un espace libre 16 est ainsi ménagé dans lequel, après le montage par vissage, l'extrémité du tube 2, déformée va venir se loger et se comprimer. Le filetage 11 intérieur du manchon 10 est interrompu avant l'émergence de la surface de révolution tronc-conique convergente 14, en sorte que l'espace libre 16 soit, en partie au moins, constitué d'une surface lisse 17. De préférence, cette surface lisse 17 est d'un diamètre au plus égal au diamètre en creux du filetage 11, de façon à ménager encore plus d'espace pour l'extrémité du tube 2.

Avantageusement, les espaces délimités par le droit du filetage 11 dans un sens et par le droit de la surface de révolution tronc-conique convergente 14 dans l'autre sens se chevauchent. Ainsi l'extrémité du tube 2 est prise en sandwich et fortement coincée.

On constatera au vu de ces figures que rien ne s'oppose à ce que le raccord puisse être défait en dévissant la bride de gauche 1 et en la sortant du manchon 10.

A droite en revanche, ou a représenté une bride 1 avec un étranglement annulaire 9, lequel a cédé en cours de montage. La bride 1 s'est alors brisée en deux parties 18 et 19, la partie libre 19 jouant librement et prenant d'elle-même sa position. Un tel ensemble ne peut plus être dévissé.

Le raccord selon l'invention peut être utilisé avec tous les tubes déformables, tels que les tubes en matière platique, simples ou armés d'une âme métallique, ainsi que les tubes composites, plastique/métal/textile/plastique par exemple. Selon les diamètres et les spécifications de construction, ils peuvent être calibrés pour une tenue donnée à la pression, par exemple, 15, 50, 100, 250, 500, 750 bars. Ils peuvent être employés pour raccorder des tuyaux à gaz ou des tuyaux à liquide, notamment de l'eau, des eaux d'évacuation, des liquides agressifs. Ils trouvent donc leur emploi dans l'industrie des boissons, dans l'industrie alimentaire, dans l'industrie du froid pour les liquides de réfrigération, ou dans les industries chimiques, pétrolières et pétrochimique.

### Revendications

1. Raccord étanche pour tubes déformables comprenant par tube (2) à raccorder, une bride (1) filetée (7) extérieurement à enfiler sur le tube (2) et à visser dans un manchon (10) portant intérieurement des filetages (11) correspondants, le manchon (10) portant intérieurement, de son coeur (12) en direction de chacune de ses extrémités (13), une surface de révolution tronc-conique convergente (14) qui émerge de la paroi intérieure (15) à une profondeur supérieure à la longueur de pénétration de la bride (1) dans le manchon (10) caractérisé en ce que la surface de révolution tronc-conique (14) se termine, du côté du coeur (12) du manchon (10) par une surface de révolution cylindrique, ménageant ainsi un espace libre (16) dans lequel, après montage par vissage, l'extrémité du tube (2), déformée, vient se loger et se comprimer, et en ce que le diamètre intérieur de la bride (1) est supérieur au diamètre extérieur de la surface de révolution cylindrique terminant la surface de révolution tronc-conique (14).

2. Raccord selon la revendication 1, caractérisé en ce que le filetage (11) intérieur du manchon (10) est interrompu avant l'émergence de la surface de révolution tronc-conique convergente (14), la surface lisse (17) ainsi ménagée étant d'un diamètre au plus égal au diamètre en creux du filetage (11).

3. Raccord selon la revendication 2, caractérisé en ce que les espaces délimités par le droit du filetage (11) intérieur du manchon (10) dans un sens, et par le droit de la surface de révolution tronc-conique convergente (14) dans l'autre sens, se chevauchent.

4. Raccord selon la revendication 1, caractérisé en ce que la bride (1) comprend, dans sa partie médiane, un étranglement annulaire (9) faisant faiblesse, de telle sorte qu'en cours du montage par vissage, cet étranglement cède et la bride (1) se brise en deux parties (18, 19).

5. Utilisation du raccord selon la revendication 1 pour le raccordement de tubes en matière plastique.

### Patentansprüche

1. Undurchlässige Verbindung für verformbare Rohre, die zu jedem der zu verbindenden Rohre (2) eine auf das Rohr (2) aufschiebbare, mit einem Außengewinde (7) versehene Schelle (1) aufweist, die in eine mit einem entsprechenden Innengewinde (11) versehene Muffe (10) einschraubbar ist, wobei die Muffe (10) im Inneren von ihrem Kern (12) in Richtung auf jedes ihrer Enden (13) eine verjüngte, kegelstumpfförmige Rotationsfläche (14) aufweist, die von der Innenwand (15) zu einer Tiefe vorspringt, die über die Eindringlänge der Schelle (1) in die Muffe (10) hinausreicht, dadurch gekennzeichnet, daß die kegelstumpfförmige Rotationsfläche (14) auf der dem Kern (12) der Muffe (10) zugewandten Seite in einer zylindrischen Rotationsfläche endet, so daß ein Freiraum (16) gebildet wird, in welchem nach dem Zusammenschrauben das verformte Ende des Rohres (2) aufgenommen und geklemmt wird, und daß der Innendurchmesser der Schelle (1) größer als der Außendurchmesser der zylindrischen Rotationsfläche ist, die die kegelstumpfförmige Rotationsfläche (14) begrenzt.

2. Verbindung nach Anspruch 1, dadurch gekennzeichnet, daß das Innengewinde (11) der Muffe (10) vor dem Ansatz der kegelstumpfförmigen Rotationsfläche (14) unterbrochen ist und daß der Durchmesser der hierdurch gebildeten glatten Oberfläche (17) höchstens gleich dem lichten Durchmesser des Innengewindes (11) ist.

3. Verbindung nach Anspruch 2, dadurch gekennzeichnet, daß die Zwischenräume, die einerseits durch das Ende des Innengewindes (11) der Muffe (10) und andererseits durch das Ende der konvergierenden, kegelstrumpfförmigen Rotationsfläche (14) begrenzt werden, einander überlappen.

4. Verbindung nach Anspruch 1, dadurch gekennzeichnet, daß die Schelle (1) in ihrem Mittelteil eine ringförmige Einschnürung (9) zur Bildung einer Sollbruchstelle aufweist, so daß diese Einschnürung beim Einschrauben nachgibt und die Schelle (1) in zwei Teile (18, 19) zerbricht.

5. Verwendung der Verbindung nach Anspruch 1 zum Verbinden von Kunststoffrohren.

**Claims**

1. An impervious connector for ductile tubes, comprising for each tube (2) to be connected, a sleeve nut (1) threaded (7) on the outside to be attached on the tube (2) and to be screwed in a sleeve tube (10) bearing on the inside corresponding threadings (11), the sleeve tube (10) bearing on the inside, from its core (12) in the direction of each of its extremities (13), a convergent truncated tapered rotation surface (14) which emerges from the lower side wall (15) at a depth greater than the length of penetration of the sleeve nut (1) in the sleeve tube (10), characterised in that, the truncated tapered rotation surface (14) ends, on the core side (12) of the sleeve tube (10), in a cylindrical rotation surface, arranging thus a free space (16) in which, after assembly by screwing, the extremity of the tube (2), deformed, comes to lodge itself and compress itself and in that, the interior diameter of the sleeve nut (1) is greater than the exterior diameter of the cylindrical rotation surface ending the truncated tapered rotation surface (14).

2. A connector according to claim 1, characterised in that, the interior threading (11) of the sleeve tube (10) is interrupted before the convergent truncated tapered rotation surface (14) emerges, the smooth surface (17) thus arranged being of a diameter at the most equal to the recessed diameter of the threading (11).

3. A connector according to claim 2, characterised in that, the spaces delimited by the straight of the interior threading (11) of the sleeve tube (10) in one sense and by the straight of the convergent truncated tapered rotation surface (14) in the other sense, overlap one another.

4. A connector according to claim 1, characterised in that, the sleeve nut (1) comprises, in its median part, a ring-shaped necking (9) making a weakness, so that, in the course of the assembly by screwing, this necking gives way and the sleeve nut (1) breaks into two parts (18, 19).

5. Utilization of the connector according to claim 1 for connecting tubes of plastic material.

FIG. 1

FIG. 2

FIG. 3

FIG. 4